(19) Europäisches Patentamt
European Patent Office
Office européen des brevets

(11) **EP 1 403 324 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(51) Int Cl.:
*C08L 71/02* (2006.01)      *C08L 75/04* (2006.01)
*C09D 7/00* (2006.01)

(21) Anmeldenummer: **03020835.9**

(22) Anmeldetag: **13.09.2003**

(54) **Polyurethan-Verdickungsmittel zur Verdickung wässriger Systeme enthaltend ein Polyether Viskositätregulator**

Polyurethane thickening agent for aqueous systems comprising a polyether viscosity regulator

Agent épaississant à base de polyuréthane pour systèmes aqueux contenant un régulateur de viscosité à base de polyéther

(84) Benannte Vertragsstaaten:
**BE DE FR GB IT NL**

(30) Priorität: **27.09.2002 DE 10245099**

(43) Veröffentlichungstag der Anmeldung:
**31.03.2004 Patentblatt 2004/14**

(73) Patentinhaber: **Evonik Goldschmidt GmbH**
**45127 Essen (DE)**

(72) Erfinder:
• **Bauer, Sandra**
**47269 Duisburg (DE)**
• **Esselborn, Eberhard**
**45147 Essen (DE)**
• **Silber, Stefan, Dr.**
**47804 Krefeld (DE)**

(56) Entgegenhaltungen:
**EP-A- 0 378 048      EP-A- 0 403 718**
**EP-A- 0 761 780      EP-A- 1 078 946**
**EP-A- 1 338 615**

EP 1 403 324 B1

**Beschreibung**

Die Erfindung betrifft eine neuartige Formulierung von Verdickungsmitteln, insbesondere auf Polyurethanbasis, zur Verdickung wässriger Zubereitungen für z.B. Beschichtungssysteme.

Stand der Technik:

Eine Vielzahl von assoziativen Verdickungsmitteln auf Polyurethanbasis ist bekannt. Dies sind lineare oder verzweigte, in der Regel nichtionische Tenside mit diskreten hydrophilen und hydrophoben Domänen. Deren typische Strukturen, deren Herstellung sowie Verwendung ist unter anderem in der US-A-4 155 892 oder der US-A-4 079 028 beschrieben.

Die Polyurethanverdicker werden hergestellt aus

(a) mindestens einem wasserlöslichen Polyetherpolyol,
(b) mindestens einem wasserunlöslichen organischen Polyisocyanat,
(c) mindestens einer monofunktionellen hydrophoben organischen Verbindung ausgewählt aus Verbindungen mit einem gegenüber Isocyanaten aktiven Wasserstoffatom und organischen Monoisocyanaten und
(d) mindestens einem polyfunktionellen Alkohol oder polyfunktionellem Etheralkohol.

In der EP-A-307 775 werden wasserdispergierbare, modifizierte Polyurethanverdicker beschrieben, welche hergestellt werden aus

(a) einem Polyisocyanat,
(b) einem Polyetherpolyol,
(c) einem modifizierenden Agens mit mindestens 2 aktiven Wasserstoffatomen und mindestens einer hydrophoben Gruppe, wobei das modifizierende Agens keine Gruppen enthält, die mit Polyisocyanat oder dem Polyetherpolyol reagieren können, und
(d) einem endverkappenden Agens, wie beispielsweise alkoxylierten Alkoholen darstellen.

In der US-A-4 327 008 werden sternförmige PU-Verdicker beschrieben, die Umsetzungsprodukte aus

(a) Polyetherdiolen,
(b) höherfunktionellen (> = 3) Polyetherpolyolen oder Isocyanaten,
(c) einem Diisocyanat,
(d) bezogen auf das Polyetherdiol 37 bis 175 Molprozent Wasser sowie
(e) einem endverkappendem Monool oder Monoisocyanat.

Weitere Polyurethanverdickungsmittel sind in EP-A-0 31 777, EP-A-495 373, US-A-4 499 233, US-A-4 426 485, DE-A-4 101 239 und US-A-5 023 309 beschrieben.

Polyurethanverdicker der genannten Art und deren Zubereitungen eignen sich als Hilfsmittel für die Einstellung von rheologischen Eigenschaften wässriger Lacksysteme wie Auto- und Industrielacke, Putze und Bautenanstrichfarben, Druckfarben, Pigmentpasten, Füllstoffdispersionen oder kosmetischer Zubereitungen. US-A-4 155 892, US-A-4 079 028, EP-A-0 307 775, US-A-4 327 008, EP-A-0 031 777, EP-A-0 495 373, US-A-4 499 233, US-A-4 426 485, DE-A-41 01 239 und US-A-5 023 309.

Allen diesen Polyurethanen des Standes der Technik ist gemeinsam, dass hydrophile Segmente in einer Menge von mindestens 50 Gew.-%, höchstens 10 Gew.-% an hydrophoben Segmenten und Urethangruppen vorliegen. Unter hydrophilen Segmenten sind hierbei insbesondere hochmolekulare Polyetherketten, die insbesondere aus Ethylenoxidpolymeren bestehen, zu verstehen. Unter hydrophoben Segmenten sind insbesondere Kohlenwasserstoffketten mit mindestens sechs Kohlenstoffatomen zu verstehen.

Dem Fachmann ist geläufig, dass Verdicker mit guter Wirksamkeit nur erhalten werden können, wenn die hydrophilen Polyethersegmente ein Molekulargewicht von mindestens 6.000 g/mol aufweisen, fast ausschließlich aus Polyethylenoxid bestehen, die hydrophoben Segmente mindestens 12 Kohlenstoffatome aufweisen, sowie hydrophile und hydrophobe Segmente in einem ausgewogenen Gewichtsverhältnis von 92 bis 97 % zu 8 bis 3 % vorliegen.

Darüber hinaus sollten diese Polyurethane eine möglichst geringe Eigenviskosität aufweisen, damit sie, gegebenenfalls in Form möglichst hochkonzentrierter Lösungen, problemlos gehandhabt und verarbeitet werden können. Diese Forderung verbietet beispielsweise die naheliegende Herstellung von langen hydrophilen Segmenten durch kettenverlängernde Umsetzung von vergleichsweise niedermolekularen Polyetherdiolen mit Diisocyanaten, weil die damit verbundene höhere Zahl der Urethangruppen eine unerwünschte Erhöhung der Eigenviskosität zur Folge hat.

In jüngster Zeit wurden viele Versuche unternommen, die Eigenviskosität der Verdickungsmittel herabzusetzen. Dem Fachmann ist jedoch geläufig, dass die bloße Molekulargewichtserniedrigung mit einer Verschlechterung der Verdickerwirksamkeit einhergeht. Eine andere Möglichkeit beruht auf dem Zusatz typischer Emulgatorstrukturen (DE-A-19 600 467), insbesondere auch Acetylendiolderivaten (EP-A-0 618 243). Auch das zusätzliche Hinzufügen von Diestern ist beschrieben (DE-A-19 644 933). In der US-A-5 597 406 werden für die Formulierung ein Diol oder ein Diolmonoalkylether, ein Salz eines sulfatierten Nonylphenolethoxylates, organische Phosphorsäureester sowie nichtionische Tenside verwendet.

Diese Methoden haben zunächst den Nachteil, dass diese Tenside in hohen Konzentrationen eingesetzt werden müssen, um eine zufriedenstellende Reduktion der Eigenviskosität des Verdickers zu erreichen. Zudem sind hiermit eine Reihe weiterer Nachteile verbunden wie die durch diese Tenside hervorgerufene Schaumstabilisierung der Verdickerzubereitungen sowie insbesondere diese enthaltende wässrige Systeme, wie beispielsweise dispersionsbasierende Bautenfarben.

Zudem verschlechtert dieser Tensideintrag in unerwünschter Weise die Wasser- und Witterungsbeständigkeit von Beschichtungssystemen sowie im Falle von Bautenfarben deren Scheuerbeständigkeit.

Die sehr leistungsstarken Alkylphenolethoxylate sind aus ökotoxikologischen Gründen in die Kritik geraten und deren Verwendung wird bereits gesetzgeberisch reguliert.

Eine weitere gängige, literaturbekannte Methode, die Eigenviskosität wässriger Lösungen der Polyurethane zu reduzieren, ist der Zusatz von wasserlöslichen oder wassermischbaren Lösungsmitteln wie beispielsweise Alkohole oder Glycolderivate. Entscheidender Nachteil dieser Methodik ist jedoch, dass hiermit in unerwünschtem Masse Lösemittel in umweltverträgliche Beschichtungssysteme eingetragen werden, was dem Gedanken der VOC-Reduktion zuwiderläuft.

Es ist bekannt, dass die geschilderten Probleme verstärkt bei extrem strukturviskosen, verzweigten Polyurethanverdickern auftreten.

Anwendungen styrenoxidhaltiger Blockcopolymerisate sind in der Lack- und Druckfarbenindustrie noch weitgehend unbekannt. Bekannt sind unter anderem (DE-A-19 806 964) Polystyroloxid (block)-polyalkylenoxid-copolymere, welche ausgehend von einem monofunktionellen Startalkohol durch sequentielle Anlagerung von mindestens 2 mol Styroloxid und einem Alkylenoxid und nachfolgende Phosphorylierung zu den entsprechenden Phosphorsäureestern umgesetzt werden.

EP 1 078 946 betrifft durch Alkoxylierung erhaltene blockcopolymere, styrenoxidhaltige Polyalkylenoxide und deren Verwendung als schaumarme Pigmentnetzmittel in Lacken und Druckfarben.

EP 1 338 615 betrifft verzweigte, gegebenenfalls Siloxangruppen enthaltende Polyurethane, diese enthaltende Formulierungen und deren Verwendung zur Verdickung wässriger Systeme.

Diese Blockcopolymere werden insbesondere in ihrer neutralisierten Form z.B. als Natrium oder Kaliumsalz als Dispergatoren verwendet. Aufgrund des Elektolytgehaltes und der hohen Hygroskopizität ist die Verwendung in größeren Mengen zur Formulierung von Farben und Lacken jedoch ungeeignet. Gelangen diese Verbindungen in die Umwelt, so ist deren fehlende schnelle biologische Abbaubarkeit aufgrund der vorhandenen längeren Styroloxidblöcken von Nachteil.

Der vorliegenden Erfindung lag daher die Aufgabe zugrunde, neue Formulierungshilfsmittel für Polyurethanverdicker und daraus hergestellte schaumarme und VOC-freie (volatile organic compound-freie) Zubereitungen zur Verfügung zu stellen, die leicht handhabbar und dosierbar sind, eine geringe Eigenviskosität bei teilweise extrem verdickender Wirkung besitzen sowie insbesondere keine negativen Beeinträchtigungen finaler Beschichtungseigenschaften wie Scheuerbeständigkeiten und Witterungsbeständigkeiten aufweisen.

Diese Aufgabe wird erfindungsgemäß überraschenderweise gelöst, durch Mitverwendung eines Viskositätsregulators der allgemeinen Formel (I) gemäß Anspruch 1

$$R^1\text{-O-}(SO)_a\text{-}(EO)_b\text{-}(PO)_c\text{-}(BO)_d\text{-}(DTO)_e\text{-}R^2$$

worin bedeuten

R$^1$, R$^2$    unabhängig voneinander einer der Reste aus der Gruppe Wasserstoff, ein gegebenenfalls substituierter und/oder Mehrfachbindungen und/oder Heteroatome enthaltender aliphatischer, cycloaliphatischer Kohlenwasserstoffrest, ein gegebenenfalls substituierter und/oder Heteroatome enthaltender aromatischer Rest, ein Acylrest, ein Carboxyacylrest, ein Carboxyalkylrest,

SO =    Styrenoxydrest,

EO =    Ethylenoxydrest,

PO =    Propylenoxydrest,

BO =    Butylenoxydrest und

DTO =    Dodecenoxid/Tetradecenoxid (einzeln oder im Gemisch),

a =     1 bis 5,
b =     3 bis 30,
c =     0 bis 5,
d =     0 bis 5,
e =     0 bis 5

worin

$$(a + c + d + e) <= b$$

ist.

Ein Gegenstand der Erfindung sind daher Verdickungsmittel für Farben und Lacke enthaltend Polyurethane, Wasser, Viskositätsregulatoren und gegebenenfalls organische Lösungsmittel, welche dadurch gekennzeichnet sind, dass als Viskositätsregulatoren Verbindungen der allgemeinen Formel (I) gemäß Anspruch 1

$$R^1-O- (SO)_a- (EO)_b- (PO)_c- (BO)_d- (DTO)_e-R^2$$

worin bedeuten

$R^1, R^2$     unabhängig voneinander einer der Reste aus der Gruppe Wasserstoff, ein gegebenenfalls substituierter und/oder Mehrfachbindungen und/oder Heteroatome enthaltender aliphatischer, cycloaliphatischer Kohlenwasserstoffrest, ein gegebenenfalls substituierter und/oder Heteroatome enthaltender aromatischer Rest, ein Acylrest, ein Carboxyacylrest, ein Carboxyalkylrest,
SO =     Styrenoxidrest,
EO =     Ethylenoxydrest,
PO =     Propylenoxydrest,
BO =     Butylenoxydrest und
DTO =     Dodecenoxid bzw. Tetradecenoxid (als Reinsubstanz oder im Gemisch),
a =     1 bis 5,
b =     3 bis 30,
c =     0 bis 5,
d =     0 bis 5,
e =     0 bis 5,

worin

$$(a + c + d + e) <= b$$

ist, mitverwendet werden.

Ein weiterer Gegenstand der Erfindung sind Zubereitungen zur Verdickung wässriger Systeme, bestehend aus einer Mischung aus

(a) 10 bis 80 Gew.-Teile eines Verdickungsmittels auf Basis von Polyurethanen,
(b) 0 bis 80 Gew.-Teile Wasser, derart, dass die Summe aus (a) + (b) + (c) + (d) = 100 ist,
(c) 0 bis 50 Gew.-Teile Colösemittel sowie
(d) 5 bis 80 Gew.-Teile eines Viskositätsregulators der allgemeinen Formel (I) gemäß Anspruch 1

$$R^1-O- (SO)_a-(EO)_b-(PO)_c- (BO)_d- (DTO)_e-R^2$$

worin bedeuten

$R^1, R^2$     unabhängig voneinander einer der Reste aus der Gruppe Wasserstoff, ein gegebenenfalls substituierter und/oder Mehrfachbindungen und/oder Heteroatome enthaltender aliphatischer, cycloaliphatischer Kohlenwasserstoffrest, ein gegebenenfalls substituierter und/oder Heteroatome enthaltender aromatischer Rest, ein Acylrest, ein Carboxyacylrest, ein Carboxyalkylrest,
SO = Styrenoxydrest,
EO = Ethylenoxydrest,
PO = Propylenoxydrest,
BO = Butylenoxydrest und
DTO = Dodecenoxid/Tetradecenoxid (einzeln oder im Gemisch),
a = 1 bis 5,
b = 3 bis 30,
c = 0 bis 5,
d = 0 bis 5,
e = 0 bis 5,

worin

$$(a + c + d + e) <= b,$$

ist.

Weitere Gegenstände der Erfindung sind gekennzeichnet durch die Gegenstände der Ansprüche.

Die erfindungsgemäß mitverwendbaren Verdickungsmittel sind hydrophob modifizierte polyethylenbasierte Polyurethane. Dies sind lineare oder verzweigte, in der Regel nichtionische Tenside mit diskreten hydrophilen und hydrophoben Domänen. Deren typische Strukturen, deren Herstellung sowie Verwendung ist unter anderem in der US-A-4 155 892, US-A-4 079 028, EP-A-0 307 775, US-A-4 327 008, EP-A-0 031 777, EP-A-0 495 373, US-A-4 499 233, US-A-4 426 485, DE-A-41 01 239 und US-A-5 023 309 beschrieben.

Wesentliches erfindungsgemässes Charakteristikum dieser Viskositätsregulatoren ist ihr Gehalt an Styrenoxid. Diese Polyether liegen wiederum in Form eines Gemisches in einer im wesentlichen durch statistische Gesetze geregelten Verteilung vor. Die Anordnung der verschiedenen Alkylenoxidmonomere kann statistisch oder blockweise erfolgen, wobei die blockweise Anordnung bevorzugt ist, insbesondere diejenige, in der das Styrenoxid direkt auf den Startalkohol R"OH aufpolymerisiert wird. Mit zunehmendem Gehalt an Styrenoxid setzen diese Emulgatoren die Eigenviskosität drastisch herab.

Besonders bevorzugt ist ein Viskositätsregulator mit einer Nonylphenol ähnlichen Struktur, bestehend aus dem Startalkohol iso-Nonanol welcher mit 1,2 mol Styrenoxid und 10 mol Ethylenoxid alkoxyliert wurde.

Die Herstellung der erfindungsgemäßen Zubereitungen kann in an sich bekannter Weise erfolgen. So kann beispielsweise die Komponente (d) unter Rühren zu dem Polyurethanverdicker (a) zugegeben werden mit nachfolgendem Einrühren des Wassers. Bei Einhaltung dieser Reihenfolge nutzt man gleich die stark verdünnende Wirkung der neuartigen Verbindung; erfolgt die Zugabe des Wassers zuerst, so tritt eine unerwünscht hohe Viskosität auf, was in vielen Fällen eine zeitaufwändige Weiterverarbeitung zur Folge hat. Idealerweise erfolgen diese Schritte unmittelbar nach Herstellung des Polyurethanverdickungsmittels.

Ausführungsbeispiele:

Synthese des Polyalkylenoxids

3.364 g (23,4 mol) Trimethylhexanol und 163 g (2,3 mol) Kaliummethylat wurden in einen Reaktor gegeben. Nach sorgfältiger Spülung mit Reinstickstoff wurde auf 110 °C erhitzt, und es wurden 3.082 g (25,4 mol) Styrenoxid innerhalb von einer Stunde zugegeben. Nach weiteren zwei Stunden war die Anlagerung des Styrenoxides beendet, erkennbar an einem Restgehalt an Styrenoxid, der laut GC < 0,1 Gew.-% lag. Anschließend wurden 3.392 g (77,1 mol) Ethylenoxid so schnell in den Reaktor dosiert, dass die Innentemperatur 120 °C und der Druck 6 bar nicht überschritt. Nach vollständiger Einleitung des Ethylenoxides wurde die Temperatur so lange auf 115 °C gehalten, bis ein konstanter Manometerdruck das Ende der Nachreaktion anzeige. Schließlich wurden bei 80 bis 90 °C die nicht umgesetzten Restmonomere im Vakuum entfernt. Das erhaltene Produkt wurde mit Hilfe von Phosphorsäure neutralisiert und das Wasser durch Destillation, das entstandene Kaliumphosphat durch Filtration zusammen mit einem Filterhilfsmittel entfernt. Das Molekulargewicht aus der Bestimmung der Hydroxylzahl bei einer angenommenen Funktionalität von 1 betrug M = 467 g/mol.

Dem Fachmann ist geläufig, dass die Reihenfolge der Alkoxylierung beliebig gewählt werden kann. Erfolgt zum Beispiel die Alkoxylierung zuerst mit den niederen Epoxiden wie Ethylenoxid, Propylenoxid oder Butylenoxid und erst zum Schluss mit dem Styroloxid, so ist der Rest R[1] ein Wasserstoff. Aufgrund der hohen Reaktivität der niederen Epoxyde und der geringeren Reaktivität der höheren Epoxide ist der in der Technik gewählte Weg im Allgemeinen der, dass die Epoxide mit der geringeren Reaktivität zuerst an das Startmolekül angelagert werden. In besonderen Fällen kann es jedoch notwendig sein, das Styroloxid und die höheren Alkylenoxide zum Schluss anzulagern und die besonderen physikalisch chemischen Eigenschaften der freien OH-Gruppe auszunutzen.

In analoger Weise wurden nach dem Stand der Technik entsprechenden Verfahren die erfindungsgemäßen und erfindungsgemäß zu verwendenden Verbindungen A2 bis A12 hergestellt.

| Verbindung | R$^1$ | R$^2$ | a | b | c | d | e | Mg/mol |
|---|---|---|---|---|---|---|---|---|
| A1 | 3,5,5-Trimethylhexanyl | H | 1 | 5 | 0 | 0 | 0 | 435 |
| A2 | 3,5,5-Trimethylhexanyl | H | 1,2 | 10 | 0 | 0 | 0 | 670 |
| A3 | 1-Nonanyl | H | 1 | 9 | 0 | 0 | 0 | 635 |
| A4 | 1-Decanyl | H | 1 | 9 | 0 | 3 | 0 | 845 |
| A5 | 1-Dodecanyl | H | 1,9 | 12 | 3 | 0 | 0 | 860 |
| A6 | 2-Ethylhexyl | H | 1 | 9 | 3 | 0 | 0 | 790 |
| A7 | 3,5,5-Trimethylhexanyl | H | 3 | 12 | 1 | 0 | 0 | 990 |
| A8 | Butyl | H | 1,2 | 10 | 0 | 0 | 0 | 620 |
| A9 | Methyl | H | 1,2 | 10 | 0 | 0 | 1 | 780 |
| A10 | Butyl | CO-CH$_3$ | 2 | 14 | 1 | 3 | 0 | 1150 |
| A11 | 3, 5, 5-Trimethylhexanyl | CO-C$_2$H$_4$-COOH | 1,5 | 8 | 0 | 0 | 0 | 720 |
| A12 | 3,5,5-Trimethylhexanyl | CH$_2$COOH | 3 | 30 | 4 | 0 | 0 | 1700 |

Synthese von Polyurethanen:

Polyurethan B1

Rohstoffe:

1,05 mol Desmodur® -N, 22,0 % NCO, Molekulargewicht = 572 g/mol, 97 Val.-% eines Laurylalkohol gestarteten Polyethers, alkoxyliert mit 2 mol SO und 100 mol EO; MG lt. OHZ = 4.600 g/mol 1 Val.-% eines Butandiol gestarteten Polyethers, alkoxyliert mit 5 mol EO und 5 mol BO; MG lt. OHZ = 638 g/mol und 2 Val.-% des Polyethersiloxans "Tego® Foamex 840"; MG lt. OHZ = 5.220 g/mol.

Durchführung:

97 Val.-% entsprechend 4.462 g des Laurylalkohol gestarteten Polyethers mit dem Molekulargewicht 4.600 g/mol (die Molekulargewichte werden aus der OH-Zahl berechnet), 1 Val.-% entsprechend 3,2 g des Butandiol gestarteten Polypropylen-butylen-glykols mit dem Molekulargewicht 638 g/mol und 2 Val.-% entsprechend 52 g des Polyethersiloxans "Tego Foamex 840" mit dem Molekulargewicht 5.200 g/mol werden in den trockenen Reaktor unter N$_2$ vorgelegt. Zur Entwässerung der Polyethermischung werden die Produkte im Reaktionsbehälter auf 110 °C aufgeheizt und unter Vakuum (< 15 mm) und einem leichten Stickstoffstrom 1 h lang entwässert, der Wassergehalt (nach Karl Fischer) soll < 0,03 % betragen. Bei höherem Wassergehalt wird die Zeit zur Entwässerung entsprechend verlängert. Nach erfolgter Trocknung lässt man den Ansatz auf 80 °C abkühlen. Nun werden 600 g Desmodur N, entsprechend 1,05 mol, d.h., mit einem NCO-Index von 1,05 zu der flüssigen Reaktionsmischung gegeben.

Zunächst wird das Desmodur-N innig mit den OH-funktionellen Komponenten vermischt. Dann erfolgt die Zugabe von 5 g Dibutylzinndilaurat; dabei ist eine leichte exotherme Reaktion zu erkennen, der Temperaturanstieg beträgt ca. 10 °C. Die Viskosität steigt im Laufe der Zeit merklich an. Nach 6 Std. erfolgt eine Reaktionskontrolle über die Bestimmung des NCO-Gehaltes. Bei einem NCO-Wert von < 0,01 % ist die Reaktion weitestgehend abeschlossen. Man erhält ein bei Raumtemperatur festes, leicht zerbrechliches Wachs. Im gemahlenen Zustand ist es ohne zusammenzusintern lagerfähig und von heller Farbe.

Polyurethan B2

100 Val.-% entsprechend 3.400 g des Stearylalkohol gestarteten Polyethers (alkoxyliert mit 3 mol BO und 80 mol EO) mit dem Molekulargewicht 3.400 g/mol (die Molekulargewichte werden aus der OH-Zahl berechnet) werden in den trockenen Reaktor unter $N_2$ vorgelegt. Zur Entwässerung des Polyethers werden die Produkte im Reaktionsbehälter auf 110 °C aufgeheizt und unter Vakuum (< 15 mm) und einem leichten Stickstoffstrom 1 h lang entwässert, der Wassergehalt (nach Karl Fischer) soll < 0,03 % betragen. Bei höherem Wassergehalt wird die Zeit zur Entwässerung entsprechend verlängert. Nach erfolgter Trocknung lässt man den Ansatz auf 80 °C abkühlen. Nun werden 600 g Desmodur N, entsprechend 1,05 mol, d.h., mit einem NCO-Index von 1,05 zu der flüssigen Reaktionsmischung gegeben. Zunächst wird das Desmodur-N mit den OH-funktionellen Komponenten innig vermischt. Dann erfolgt die Zugabe von 4 g Dibutylzinndilaurat; dabei ist eine leichte exotherme Reaktion zu erkennen, der Temperaturanstieg beträgt ca. 10 °C. Die Raktionsmischung ist noch sehr flüssig.
Nach 6 Std. erfolgt eine Reaktionskontrolle über die Bestimmung des NCO-Gehaltes. Bei einem NCO-Wert von < 0,01 % ist die Reaktion weitestgehend abgeschlossen.
Man erhält ein bei Raumtemperatur festes, leicht zerbrechliches Wachs. Im gemahlenen Zustand ist es ohne zusammenzusintern lagerfähig und von heller Farbe.
In analoger Weise werden nach dem Stand der Technik entsprechenden Verfahren folgende Verbindungen hergestellt.

Polyurethan B3

aus 1,05 mol Desmodur N, 96 Val.-% eines Stearylalkohol gestarteten Polyethers entsprechend 4.320 g, alkoxyliert mit 100 mol EO; MG lt. OHZ 4.500 g/mol. 2 Val.-% eines Propylenglykol gestarteten Polyethers entsprechend 8,3 g, alkoxyliert mit 5 mol EO und 5 mol SO; MG lt. OHZ 830 g/mol.
2 Val.-% des Polysiloxandiols "Tego Glide 440" entsprechend 29,0 g mit dem Molekulargewicht 2.900 g/mol. Die Herstellung erfolgt wie in Beispiel B1 beschrieben. Die hier aufgeführten zusätzlichen Diole, also das Polypropylenglykol sowie das Polysiloxandiol "Tego Glide 440" werden ebenfalls schon vor der Polyethertrocknung dem Ansatz zugesetzt, um einer unerwünschten zufälligen Wasserverunreinigung entgegenzuwirken.
Das Reaktionsprodukt ist nach dem Abkühlen ein festes, leicht zerbrechliches Wachs.

Polyurethan B4

180 g eines Polyethylenglykols mit dem Molekulargewicht von 6.000 g/mol (0,03 mol) werden in den trockenen Reaktor unter $N_2$ vorgelegt. Zur Entwässerung des Polyethers wird das Produkt im Reaktionsbehälter auf 110 °C aufgeheizt und unter Vakuum (< 15 mm) und einem leichten Stickstoffstrom 1 h lang entwässert, der Wassergehalt (nach Karl Fischer) soll < 0,03 % betragen. Bei höherem Wassergehalt wird die Zeit zur Entwässerung entsprechend verlängert. Nach erfolgter Trocknung lässt man den Ansatz auf 80 °C abkühlen. Nun werden 4,66 g Vestanat® IPDI (Isophorondiisocyanat) d.h., mit einem NCO-Index von 1,05 und 5,9 g Stearylisocyanat zu der flüssigen Reaktionsmischung gegeben. Zunächst werden die Isocyanate mit den OH-funktionellen Komponenten innig vermischt. Dann erfolgt die Zugabe von 4 g Dibutylzinndilaurat; dabei ist eine leichte exotherme Reaktion zu erkennen, der Temperaturanstieg beträgt ca. 10 °C. Die Raktionsmischung ist noch sehr flüssig. Nach 6 Std. erfolgt eine Reaktionskontrolle über die Bestimmung des NCO-Gehaltes. Bei einem NCO-Wert von < 0,01 % ist die Reaktion weitestgehend abgeschlossen.
Man erhält ein bei Raumtemperatur festes, leicht zerbrechliches Wachs . Im gemahlenen Zustand ist es ohne zusammenzusintern lagerfähig und von heller Farbe.

Polyurethan B5

160 g entsprechend 0,02 mol des mit einem Diol gestarteten Polyethers mit dem Molekulargewicht von 8.000 g/mol (die Molekulargewichte werden aus der OH-Zahl berechnet) sowie 48 g entsprechend 0,02 mol eines mit 50 mol Ethylenoxid alkoxylierten Stearylalkohols werden in den trockenen Reaktor unter $N_2$ vorgelegt. Zur Entwässerung des Polyethers wird dieser im Reaktionsbehälter auf 110 °C aufgeheizt und unter Vakuum (< 15 mm) und einem leichten Stickstoffstrom 1 h lang entwässert, der Wassergehalt (nach Karl Fischer) soll < 0,03 % betragen. Bei höherem Wassergehalt wird die Zeit zur Entwässerung entsprechend verlängert. Nach erfolgter Trocknung lässt man den Ansatz auf 80 °C abkühlen. Nun werden 8,1 g Desmodur® W (Dicyclohexylmethandiisocyanat, Fa. Bayer) entsprechend einem NCO-Index von 1,05 zu der flüssigen Reaktionsmischung gegeben. Zunächst wird das Desmodur-H mit den OH-funktionellen Komponenten innig vermischt. Dann erfolgt die Zugabe von 4 g Dibutylzinndilaurat; dabei ist eine leichte exotherme Reaktion zu erkennen, der Temperaturanstieg beträgt ca. 10 °C. Die Raktionsmischung ist noch sehr flüssig. Nach 6 Std. erfolgt eine Reaktionskontrolle über die Bestimmung des NCO-Gehaltes. Bei einem NCO-Wert von < 0,01 % ist die Reaktion weitestgehend abgeschlossen.

Man erhält ein bei Raumtemperatur festes, leicht zerbrechliches Wachs. Im gemahlenen Zustand ist es ohne zusammenzusintern lagerfähig und von heller Farbe.

Polyurethan B6

Es werden 180 g Polyethylenglykol mit dem Molekulargewicht von 6.000 g/mol mit 3,72 Laurylalkohol und 7,32 g Toluylendiisocyanat nach der unter Beispiel B4 bschriebenen Weise zu einem Polyurethan umgesetzt jedoch mit dem Unterschied, dass der Laurylalkohol separat in bekannter Weise getrocknet wird und infolgedessen erst nach der Polyethertrocknung und vor der Isocyanatzugabe dem Ansatz zugeführt wird. Man erhält ein bei Raumtemperatur festes, leicht zerbrechliches Wachs. Im gemahlenen Zustand ist es ohne zusammenzusintern lagerfähig und von heller Farbe.

Polyurethan B7

Es werden 150 g Polyethylenglykol mit dem Molekulargewicht von 3.000 g/mol mit 3,72 g Laurylalkohol und 10,9 g Toluylendiisocyanat nach der unter Beispiel B5 bschriebenen Weise zu einem Polyurethan umgesetzt. Man erhält ein bei Raumtemperatur festes, leicht zerbrechliches Wachs.

Im gemahlenen Zustand ist es ohne zusammenzusintern lagerfähig und von heller Farbe.

Polyurethan B8

Es werden 180 g Polyethylenglykol mit dem Molekulargewicht von 6.000 g/mol mit 3,16 g Decylalkohol und 9,3 g Isophorondiisocyanat nach der unter Beispiel B5 bschriebenen Weise zu einem Polyurethan umgesetzt. Man erhält ein bei Raumtemperatur festes, leicht zerbrechliches Wachs.

Im gemahlenen Zustand ist es ohne zusammenzusintern lagerfähig und von heller Farbe.

Polyurethan B9

Es werden 180 g Polyethylenglykol mit dem Molekulargewicht von 6.000 g/mol mit 5,46 g Stearylalkohol und 7,1 g Hexamethylendiisocyanat nach der unter Beispiel B5 bschriebenen Weise zu einem Polyurethan umgesetzt. Man erhält ein bei Raumtemperatur festes, leicht zerbrechliches Wachs.

Im gemahlenen Zustand ist es ohne zusammenzusintern lagerfähig und von heller Farbe.

Formulierung der Polyurethane:

Beispiele F1 bis F15

Zu dem 80 °C warmen Polyurethan werden unter gutem Vermischen der Emulgator aus Beispiel A1 bis A12 und gegebenenfalls das Colösemittel Propylenglykol zugegeben und so lange gerührt, bis eine homogene Lösung resultiert. Danach wird die jeweils erforderliche Menge Wasser zugegeben.

Die Viskositäten der so erhaltenen Lösungen wurden im Haake-Viskosimeter RV 12, Meßkörper SV DIN, bei 23 °C und 10,3 s-1 gemessen und sind in der folgenden Tabelle aufgeführt.

| Formulierung Nr. | PUR aus Beispiel Nr. | PUR % | Emulgator Nr. | Emulgator % | Wasser % | Colösemittel % | Viskosität bei 23 °C und 10,3 s-1 |
|---|---|---|---|---|---|---|---|
| F1* | B1 | 25 | A1 | 25 | 50 | 0 | 5600 |
| F2* | B2 | 18 | A2 | 52 | 20 | 10 | 1200 |
| F3* | B3 | 15 | A3 | 40 | 25 | 20 | 3600 |
| F4* | B4 | 35 | A4 | 25 | 40 | 0 | 9500 |

(fortgesetzt)

| Formulierung Nr. | PUR aus Beispiel Nr. | PUR % | Emulgator Nr. | Emulgator % | Wasser % | Colösemittel % | Viskosität bei 23 °C und 10,3 s-1 |
|---|---|---|---|---|---|---|---|
| F5* | B5 | 30 | A5 | 30 | 40 | 0 | 8200 |
| F6* | B6 | 25 | A6 | 15 | 60 | 0 | 6700 |
| F7* | B7 | 28 | A7 | 22 | 50 | 0 | 7400 |
| F8* | B8 | 30 | A2 | 10 | 60 | 0 | 5700 |
| F9* | B9 | 20 | A4 | 40 | 30 | 0 | 2200 |
| F10* | B4 | 30 | A2 | 25 | 50 | 0 | 6400 |
| F11* | B6 | 25 | A8 | 20 | 55 | 0 | 5800 |
| F12* | B7 | 25 | A9 | 25 | 50 | 0 | 6200 |
| F13 | B8 | 30 | A10 | 15 | 55 | 0 | 5200 |
| F14 | B9 | 20 | A11 | 30 | 50 | 0 | 3100 |
| F15 | B6 | 20 | A12 | 20 | 60 | 0 | 7400 |
| * nicht erfindungsgemäß | | | | | | | |

Ohne die Verwendung des erfindungsgemäßen Wirkstoffes sind die Lösungen hochviskos und stark trübe. Die Verdickungsmittel der Beispiele 1 bis 3 sind ohne den Zusatz des erfindungsgemäßen Emulgators nicht löslich und befinden sich nur angequollen am Boden des Gefäßes.

Die nachfolgenden Beispiele zeigen, dass die verdickende Wirkung der Polyurethankomponente (a) durch den viskositätserniedrigenden Zusatz (d) letzendlich in der Bautenfarbenrezeptur nicht beeinträchtigt wird.

Anwendungstechnische Beispiele:

Formulierung einer Bautenfarben auf Basis von "Acronal® 290 D"

| Produkt / Hersteller | Einwaage in g |
|---|---|
| Wasser | 265,5 |
| Calgon® N[1)] 10 %ig in Wasser (Bankiser GmbH) 10 %ig in Wasser | 2,0 |
| Erfindungsgemäße Formulierung des PUR-Verdickers 35 %ig* | 8,5 |
| TEGO® Foamex 8030 (Degussa, Tego Coating and Ink Additives) [Polyethersiloxan Entschäumer] | 1,0 |
| NaOH 25 %ig | 1,0 |
| Dispax® N 40 (Allied Colloids Ltd) [Polyacrylat, Dispergierhilfsmittel] | 5,0 |
| Dowanol® PnB (Dow chemical) [Dipropylenglykolmonobutylether, Colösemittel] | 5,0 |
| Preventol® D6 (Bayer AG) [Konservierungsmittel] | 2,0 |
| Bayertitan RKB-5 (Bayer AG) [Titandioxid] | 57,0 |

(fortgesetzt)

| Produkt / Hersteller | Einwaage in g |
|---|---|
| Socal® P2 (Solvay Alkali GmbH) [Füllstoff] | 80,0 |
| Microtalc® AT 200 (Norwegian Talkum) [Talkum] | 91,0 |
| Omyalite® 90 (Plüss Staufer AG) [Füllstoff] | 125,0 |
| Omyacarb® 5 GU (Plüss Staufer AG) [Füllstoff] | 297,0 |
| Acronal® 290 D (BASF) Styrol-Acrylat-Dispersion [Bindemittel] | 60 |
| Gesamt | 1000 |
| *) Bei abweichender Konzentration wird die Wassermenge derart geändert, dass die Gesamtsumme immer 1.000 g beträgt. | |

Die Bautenfarbe auf Basis von Acronal 290 D wird mit der genannten Menge an Verdickungsmittel formuliert. Nach einem Tag Ruhezeit erfolgt die Bestimmung der Viskosität. Die gefundenen Messergebnisse sind in der folgenden Tabelle dargestellt. Das Messsystem besteht aus einem Haake-Viskosimeter RV 12, Messkörper SV DIN, Temperatur 23 °C.

| Verdickungsmittel Formulierung aus Beispiel Nr. | Viskosität $10,3 \cdot \sec^{-1}$ mPas | Viskosität $100 \cdot \sec^{-1}$ mPas | Viskosität $600 \cdot \sec^{-1}$ mPas |
|---|---|---|---|
| F1* | 9800 | 3900 | 1900 |
| F2* | 8500 | 3000 | 1300 |
| F3* | 9200 | 3200 | 1320 |
| F4* | 6400 | 2600 | 1230 |
| F5* | 4600 | 2000 | 1040 |
| F6* | 4400 | 2050 | 1140 |
| F7* | 5100 | 2100 | 1060 |
| F8* | 2400 | 1330 | 890 |
| F9* | 7800 | 3000 | 1150 |
| F10* | 6500 | 2600 | 1250 |
| F11* | 3900 | 1760 | 820 |
| F12* | 5000 | 2050 | 830 |
| F13 | 2500 | 1390 | 920 |
| F14 | 7800 | 3000 | 1380 |
| F15 | 6500 | 2600 | 1250 |
| * nicht erfindungsgemäß | | | |

Formulierung einer Semigloss Bautenfarbe auf Basis einer "Rhoplex AC-347" Emulsion

| Produkt/Hersteller | Einwaage in g |
|---|---|
| Propylenglycol (BASF)<br>[Colösemittel] | 5,26 |
| Tamol® 165 (Rohm & Haas)<br>[Polyacrylat, Dispergierhilfsmittel] | 0,86 |
| TEGO® Foamex 805<br>(Degussa, Tego Coating and Ink Additives)<br>[Polyethersiloxan Entschäumer] | 0,10 |
| Kathon® LX 1,5 % (Rohm & Haas)<br>[Biozid] | 0,17 |
| Ti-Pure® R 706 (Du Pont)<br>[Titandioxid] | 19,46 |
| Minex® TM 10 (Unimin)<br>[Füllstoff] | 1,95 |
| Wasser | 1,01 |
| Ammoniaklösung 28 %ig | 0,19 |
| Wasser | 4,86 |
| Rhoplex® AC-347 (Rohm & Haas)<br>[Bindemittel, Acrylatdispersion] | 42,88 |
| Rhopaque® OP-96 (Rohm & Haas)<br>[Füllstoffdispersion] | 4,16 |
| Texanol® (Eastman Kodak]<br>[Lösungsmittel] | 2,12 |
| Triton® GM-7M (Rohm & Haas) [Netzmittel] | 0,15 |
| TEGO® Foamex 805 (Degussa, Tego Coating and Ink Additives) [Polyethersiloxan-Entschäumer] | 0,29 |
| Erfindungsgemäße Formulierung des PUR-Verdickers (35 %ig)* | 1,10 |
| Wasser | 13,36 |
| Gesamt | 100 |
| *) Bei abweichender Konzentration wird die Wassermenge derart geändert, dass die Gesamtsumme immer 100 g beträgt. | |

Diese Formulierung wird in der dem Fachmann geläufigen Art und Weise hergestellt. Dazu werden die Komponenten in der Reihenfolge, wie in der Tabelle angegeben, mittels einer Dispergierscheibe bei 1.000 Upm innerhalb von 30 Minuten homogen vermischt. Die Bautenfarbe auf Basis von Rhoplex AC-347 (Rohm & Haas) wird also wie beschrieben mit der genannten Menge an Verdickungsmittel modifiziert. Nach einem Tag Ruhezeit erfolgt die Bestimmung der Viskosität der so erhaltenen Lösungen nach den Angaben des Herstellers im Haake-Viskosimeter RV 12, Messkörper SV DIN, bei 23 °C. Die gefundenen Messergebnisse sind in der folgenden Tabelle dargestellt:

| Verdickungsmittel aus Beispiel Nr. | Viskosität 10,3*sec$^{-1}$ mPas | Viskosität 100*sec$^{-1}$ mPas | Viskosität 600*sec$^{-1}$ mPas |
|---|---|---|---|
| F1* | 9500 | 3800 | 1800 |
| F2* | 8200 | 2900 | 1250 |
| F3* | 8900 | 3100 | 1300 |
| F4* | 6100 | 2500 | 1170 |
| F5* | 4400 | 1900 | 1000 |

(fortgesetzt)

| Verdickungsmittel aus Beispiel Nr. | Viskosität 10,3*sec$^{-1}$ mPas | Viskosität 100*sec$^{-1}$ mPas | Viskosität 600*sec$^{-1}$ mPas |
|---|---|---|---|
| F6* | 4200 | 1950 | 1080 |
| F7* | 4900 | 2000 | 1020 |
| F8* | 2200 | 1220 | 810 |
| F9* | 7500 | 2900 | 1330 |
| F10* | 6300 | 2500 | 1220 |
| F11* | 3900 | 1760 | 820 |
| F12* | 5000 | 2050 | 830 |
| F13 | 2500 | 1390 | 920 |
| F14 | 7800 | 3000 | 1380 |
| F15 | 6500 | 2600 | 1250 |
| * nicht erfindungsgemäß | | | |

**Patentansprüche**

1. Verdickungsmittel für Farben und Lacke enthaltend Polyurethane, Wasser, Viskositätsregulatoren und gegebenenfalls organische Lösungsmittel, **dadurch gekennzeichnet, dass** als Viskositätsregulatoren Verbindungen der allgemeinen Formel (I)

$$R^1-O-(SO)_a-(EO)_b-(PO)_c-(BO)_d-(DTO)_e-R^2$$

worin bedeuten

$R^1$ = unabhängig voneinander einer der Reste aus der Gruppe Wasserstoff, ein gegebenenfalls substituierter und/oder Mehrfachbindungen und/oder Heteroatome enthaltender aliphatischer, cycloaliphatischer Kohlenwasserstoffrest, ein gegebenenfalls substituierter und/oder Heteroatome enthaltender aromatischer Rest, ein Acylrest, ein Carboxyacylrest, ein Carboxyalkylrest,
$R^2$ = einer der Reste aus der Gruppe gegebenenfalls substituierter und/oder Mehrfachbindungen und/oder Heteroatome enthaltender aliphatischer, cycloaliphatischer Kohlenwasserstoffreste, gegebenenfalls substituierter und/oder Heteroatome enthaltender aromatischer Reste, Acylreste, Carboxyacylreste und Carboxyalkylreste,
SO = Styrenoxidrest,
EO = Ethylenoxydrest,
PO = Propylenoxydrest,
BO = Butylenoxydrest und
DTO = Dodecenoxid bzw. Tetradecenoxid (als Reinsubstanz oder im Gemisch),
a = 1 bis 5,
b = 3 bis 30,
c = 0 bis 5,
d = 0 bis 5,
e = 0 bis 5,

worin

(a + c + d + e) <=b ist, mitverwendet werden.

2. Verdickungsmittel gemäß Anspruch 1, **dadurch gekennzeichnet, dass** als Viskositätsregulatoren Verbindungen der allgemeinen Formel (I) mitverwendet werden, in denen $R^1$ Reste aus der Gruppe Wasserstoff, ein gegebenenfalls substituierter und/oder Mehrfachbindungen und/oder Heteroatome enthaltender aliphatischer, cycloaliphatischer Kohlenwasserstoffrest, ein gegebenenfalls substituierter und/oder Heteroatome enthaltender aromatischer Rest ist.

3. Verdickungsmittel, enthaltend

a) 10 bis 80 Gew.-Teile eines Verdickungsmittels auf Basis von Polyurethanen
b) 0 bis 80 Gew.-% Wasser, derart, dass die Summe aus (a) + (b) + (c) + (d) = 100 ist.
c) 0 bis 50 Gew.-Teile eines organischen Lösungsmittels
und
d) 5 bis 80 Gew.-Teile eines Viskositätsregulators der allgemeinen Formel (I)

$$R^1\text{-O- }(SO)_a\text{- }(EO)_b\text{- }(PO)_c\ (BO)_d\text{- }(DTO)_e\text{-}R^2 \text{ worin bedeuten}$$

$R^1$, $R^2$ wie in Anspruch 1 definiert,
SO = Styrenoxidrest,
EO = Ethylenoxydrest,
PO = Propylenoxydrest,
BO = Butylenoxydrest und
DTO = Dodecenoxid bzw. Tetradecenoxid (als Reinsubstanz oder im Gemisch),
a = 1 bis 5,
b = 3 bis 30,
c = 0 bis 5,
d = 0 bis 5,
e = 0 bis 5,

worin
(a+c+d+e) <=b ist, mitverwendet werden.

4. Verwendung von Verbindungen der allgemeinen Formel (I)
$R^1\text{-O-}(SO)_a\text{-}(EO)_b\text{-}(PO)_c\text{-}(BO)_d\text{-}(DTO)_e\text{-}R^2$ worin bedeuten

$R^1$ = unabhängig voneinander einer der Reste aus der Gruppe Wasserstoff, ein gegebenenfalls substituierter und/oder Mehrfachbindungen und/oder Heteroatome enthaltender aliphatischer, cycloaliphatischer Kohlenwasserstoffrest, ein gegebenenfalls substituierter und/oder Heteroatome enthaltender aromatischer Rest, ein Acylrest, ein Carboxyacylrest, ein Carboxyalkylrest,
$R^2$ = einer der Reste aus der Gruppe gegebenenfalls substituierter und/oder Mehrfachbindungen und/oder Heteroatome enthaltender aliphatischer, cycloaliphatischer Kohlenwasserstoffreste, gegebenenfalls substituierter und/oder Heteroatome enthaltender aromatischer Reste, Acylreste, Carboxyacylreste und Carboxyalkylreste,
SO = Styrenoxidrest,
EO = Ethylenoxydrest,
PO = Propylenoxydrest,
BO = Butylenoxydrest und

DTO = Dodecenoxid bzw. Tetradecenoxid (als Reinsubstanz
oder im Gemisch),

a = 1 bis 5,
b = 3 bis 30,
c = 0 bis 5,
d = 0 bis 5,
e = 0 bis 5,

worin

(a + c + d + e) <=b ist,

als Viskositätsregulatoren in Verdickungsmitteln für Farben und Lacke enthaltend Polyurethane, Wasser, Viskositätsregulatoren und gegebenenfalls organische Lösungsmittel.

5. Verwendung nach Anspruch 4, **dadurch gekennzeichnet, dass** als Viskositätsregulatoren Verbindungen der allgemeinen Formel (I) verwendet werden, in denen $R^1$ Reste aus der Gruppe Wasserstoff, ein gegebenenfalls substituierter und/oder Mehrfachbindungen und/oder Heteroatome enthaltender aliphatischer, cycloaliphatischer Kohlenwasserstoffrest, ein gegebenenfalls substituierter und/oder Heteroatome enthaltender aromatischer Rest ist.

**Claims**

1. Thickener for inks and coating materials, comprising polyurethanes, water, viscosity regulators, and, if desired, organic solvents, wherein said viscosity regulators comprise compounds of the general formula (I)

$$R^1\text{-}O\text{-}(SO)_a\text{-}(EO)_b\text{-}(PO)_c\text{-}(BO)_d\text{-}(DTO)_e\text{-}R^2 \text{ in which}$$

$R^1$ = independently at each occurrence one of the radicals from the group consisting of hydrogen, an aliphatic or cycloaliphatic hydrocarbon radical which optionally is substituted and/or contains multiple bonds and/or contains heteroatoms, an aromatic radical which optionally is substituted and/or contains heteroatoms, an acyl radical, a carboxyacyl radical, and a carboxyalkyl radical,

$R^2$ = one of the radicals from the group consisting of aliphatic or cycloaliphatic hydrocarbon radicals which optionally are substituted and/or contain multiple bonds and/or contain heteroatoms, aromatic radicals which optionally are substituted and/or contain heteroatoms, acyl radicals, carboxyacyl radicals, and carboxyalkyl radicals,

SO = styrene oxide radical,
EO = ethylene oxide radical,
PO = propylene oxide radical,
BO = butylene oxide radical, and
DTO = dodecene oxide and/or tetradecene oxide (as the individual substance or as a mixture),
a = 1 to 5,
b = 3 to 30,
c = 0 to 5,
d = 0 to 5,
e = 0 to 5

where

$$(a + c + d + e) <= b.$$

2. Thickener according to Claim 1, **characterized in that** said viscosity regulators comprise compounds of the general formula (I) in which $R^1$ is a radical selected from the group consisting of hydrogen, an aliphatic or cycloaliphatic hydrocarbon radical which optionally is substituted and/or contains multiple bonds and/or contains heteroatoms, and an aromatic radical which optionally is substituted and/or contains heteroatoms.

3. Thickener containing

a) from 10 to 80 parts by weight of a polyurethane-based thickener,
b) from 0 to 80 parts by weight of water such that the sum of (a) + (b) + (c) + (d) = 100,
c) from 0 to 50 parts by weight of an organic solvent, and
d) from 5 to 80 parts by weight of a viscosity regulator of the general formula (I)

$$R^1\text{-}O\text{-}(SO)_a\text{-}(EO)_b\text{-}(PO)_c\text{-}(BO)_d\text{-}(DTO)_e\text{-}R^2$$

in which
$R^1$ and $R^2$ are as defined in Claim 1,
SO = styrene oxide radical,

EO = ethylene oxide radical,
PO = propylene oxide radical,

BO = butylene oxide radical, and
DTO = dodecene oxide and/or tetradecene oxide (as the individual substance or as a mixture),
a = 1 to 5,
b = 3 to 30,
c = 0 to 5,
d = 0 to 5,
e = 0 to 5

where
$(a + c + d + e) <= b$.

4. Use of compounds of the general formula (I)

$$R^1\text{-O-}(SO)_a\text{-}(EO)_b\text{-}(PO)_c\text{-}(BO)_d\text{-}(DTO)_e\text{-}R^2 \text{ in which}$$

$R^1$ = independently at each occurrence one of the radicals from the group consisting of hydrogen, an aliphatic or cycloaliphatic hydrocarbon radical which optionally is substituted and/or contains multiple bonds and/or contains heteroatoms, an aromatic radical which optionally is substituted and/or contains heteroatoms, an acyl radical, a carboxyacyl radical, and a carboxyalkyl radical,

$R^2$ = one of the radicals from the group consisting of aliphatic or cycloaliphatic hydrocarbon radicals which optionally are substituted and/or contain multiple bonds and/or contain heteroatoms, aromatic radicals which optionally are substituted and/or contain heteroatoms, acyl radicals, carboxyacyl radicals, and carboxyalkyl radicals,

SO = styrene oxide radical,
EO = ethylene oxide radical,
PO = propylene oxide radical,
BO = butylene oxide radical, and
DTO = dodecene oxide and/or tetradecene oxide (as the individual substance or as a mixture),
a = 1 to 5,
b = 3 to 30,
c = 0 to 5,
d = 0 to 5,
e = 0 to 5

where

$(a + c + d + e) <= b$

as viscosity regulators in thickeners for inks and coating materials, comprising polyurethanes, water, viscosity regulators, and, if desired, organic solvents.

5. Use according to Claim 4, **characterized in that** compounds of the general formula (I) in which $R^1$ is a radical selected from the group consisting of hydrogen, an aliphatic or cycloaliphatic hydrocarbon radical which optionally is substituted and/or contains multiple bonds and/or contains heteroatoms, and an aromatic radical which optionally is substituted and/or contains heteroatoms, are used as viscosity regulators.

**Revendications**

1. Épaississant pour peintures et laques contenant des polyuréthanes, de l'eau, des régulateurs de viscosité et éventuellement des solvants organiques, **caractérisé en ce que** des composés de formule générale (I)

$$R^1\text{-O- }(SO)_a\text{- }(EO)_b\text{- }(PO)_c\text{- }(BO)_d\text{- }(DTO)_e\text{-}R^2$$

dans lesquelles
$R^1$ = indépendamment, un des radicaux du groupe constitué par l'hydrogène, un radical hydrocarboné aliphatique, cycloaliphatique, éventuellement substitué et/ou contenant des liaisons multiples et/ou des hétéroatomes, un radical aromatique éventuellement substitué et/ou contenant des hétéroatomes, un radical acyle, un radical carboxyacyle,

un radical carboxyalkyle,

$R^2$ = un des radicaux du groupe constitué par les radicaux hydrocarbonés aliphatiques, cycloaliphatiques, éventuellement substitués et/ou contenant des liaisons multiples et/ou des hétéroatomes, les radicaux aromatiques éventuellement substitués et/ou contenant des hétéroatomes, les radicaux acyle, les radicaux carboxyacyle et les radicaux carboxyalkyle,

SO = un radical oxyde de styrène,

EO = un radical oxyde d'éthylène,

PO = un radical oxyde de propylène,

BO = un radical oxyde de butylène et

DTO = oxyde de dodécène ou oxyde de tétradécène (en tant que substance pure ou en mélange),

a = 1 à 5,

b = 3 à 30,

c = 0 à 5,

d = 0 à 5,

e = 0 à 5,

avec

$(a + c + d + e) \leq b$,

sont utilisés en tant que régulateurs de viscosité.

2. Épaississant selon la revendication 1, **caractérisé en ce que** des composés de formule générale (I) dans lesquels $R^1$ signifie des radicaux du groupe constitué par l'hydrogène, un radical hydrocarboné aliphatique, cycloaliphatique, éventuellement substitué et/ou contenant des liaisons multiples et/ou des hétéroatomes, un radical aromatique éventuellement substitué et/ou contenant des hétéroatomes, sont utilisés en tant que régulateurs de viscosité.

3. Épaississant, contenant :

a) 10 à 80 parties en poids d'un épaississant à base de polyuréthanes,

b) 0 à 80 parties en poids d'eau, de manière à ce que la somme de (a) + (b) + (c) + (d) = 100,

c) 0 à 50 parties en poids d'un solvant organique et

d) 5 à 80 parties en poids d'un régulateur de viscosité de formule générale (I)

$$R^1\text{-O-} (SO)_a\text{-} (EO)_b\text{-} (PO)_c\text{-} (BO)_d\text{-} (DTO)_e\text{-}R^2$$

dans laquelle

$R^1$, $R^2$ sont tels que définis dans la revendication 1,

SO = un radical oxyde de styrène,

EO = un radical oxyde d'éthylène,

PO = un radical oxyde de propylène,

BO = un radical oxyde de butylène et

DTO = oxyde de dodécène ou oxyde de tétradécène (en tant que substance pure ou en mélange),

a = 1 à 5,

b = 3 à 30,

c = 0 à 5,

d = 0 à 5,

e = 0 à 5,

avec

$(a + c + d + e) \leq b$.

4. Utilisation de composés de formule générale (I)

$$R^1\text{-O-} (SO)_a\text{-} (EO)_b\text{-} (PO)_c\text{-} (BO)_d\text{-} (DTO)_e\text{-}R^2$$

dans lesquelles

$R^1$ = indépendamment, un des radicaux du groupe constitué par l'hydrogène, un radical hydrocarboné aliphatique, cycloaliphatique, éventuellement substitué et/ou contenant des liaisons multiples et/ou des hétéroatomes, un radical aromatique éventuellement substitué et/ou contenant des hétéroatomes, un radical acyle, un radical carboxyacyle, un radical carboxyalkyle,

$R^2$ = un des radicaux du groupe constitué par les radicaux hydrocarbonés aliphatiques, cycloaliphatiques, éventuellement substitués et/ou contenant des liaisons multiples et/ou des hétéroatomes, les radicaux aromatiques éventuellement substitués et/ou contenant des hétéroatomes, les radicaux acyle, les radicaux carboxyacyle et les radicaux carboxyalkyle,

SO = un radical oxyde de styrène,

EO = un radical oxyde d'éthylène,

PO = un radical oxyde de propylène,

BO = un radical oxyde de butylène et

DTO = oxyde de dodécène ou oxyde de tétradécène (en tant que substance pure ou en mélange),

a = 1 à 5,

b = 3 à 30,

c = 0 à 5,

d = 0 à 5,

e = 0 à 5,

avec

$(a + c + d + e) \leq b$,

en tant que régulateurs de viscosité dans des épaississants pour peintures et laques contenant des polyuréthanes, de l'eau, des régulateurs de viscosité et éventuellement des solvants organiques.

**5.** Utilisation selon la revendication 4, **caractérisée en ce que** des composés de formule générale (I) dans lesquels $R^1$ signifie des radicaux du groupe constitué par l'hydrogène, un radical hydrocarboné aliphatique, cycloaliphatique, éventuellement substitué et/ou contenant des liaisons multiples et/ou des hétéroatomes, un radical aromatique éventuellement substitué et/ou contenant des hétéroatomes, sont utilisés en tant que régulateurs de viscosité.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4155892 A
- US 4079028 A
- EP 307775 A
- US 4327008 A
- EP 031777 A
- EP 495373 A
- US 4499233 A
- US 4426485 A
- DE 4101239 A
- US 5023309 A
- EP 0307775 A
- EP 0031777 A
- EP 0495373 A
- DE 19600467 A
- EP 0618243 A
- DE 19644933 A
- US 5597406 A
- DE 19806964 A
- EP 1078946 A
- EP 1338615 A